# EUROPEAN PATENT APPLICATION

(11) **EP 4 628 437 A1**
(43) Date of publication of application: **08.10.2025**
(21) Application number: 22962935.7
(22) Date of filing: 25.10.2022
(51) Int. Cl.: B65G 63/00

(54) **MARINE CONTAINER MANAGEMENT METHOD, PROGRAM, AND MARINE CONTAINER MANAGEMENT SYSTEM**

(71) Applicant: Syscom Japan, Inc., Kitakyushu-shi, Fukuoka 802-0084 (JP)
(72) Inventor: IWANAGA, Mitsuhiro, Kitakyushu-shi, Fukuoka 806-0055 (JP)
(74) Representative: Valente Cioncoloni, Andrea
(86) International application number: PCT/JP2022/039795
(87) International publication number: WO 2024/089781

(57) **Abstract**

The present invention aims to reduce the risk of human error when a person confirms the container number, and to provide a maritime container work management method or the like which can flexibly respond to a sudden situation.

Provided is a method of managing maritime container using a maritime container management system that manages work for maritime containers, the maritime container management system comprising a first transmitter to emit a first signal wirelessly installed in a first vehicle which performs work on the maritime container, and a second receiver to receive a wireless signal installed in a second vehicle which performs work on the maritime container, and the method of managing maritime container includes a first transmitting step, by the first transmitter, of transmitting the first signal wirelessly to the second receiver, a second receiving step, by the second receiver, of receiving the first signal; and a second work start step, by the second vehicle, of starting work on the maritime container in response to the second receiving step.

## Description

### TECHNICAL FIELD

The present invention relates to method of managing maritime container, program, and maritime container management system, and in particular, to the method of managing maritime container and the like for managing work by the vehicles for the maritime container.

### BACKGROUND ART

Usually, in the harbor gate, a maritime container management system manages maritime containers which are work objects by service vehicles such as chassis, straddle carrier, gantry crane, and other vehicles. The management system also manages their work order.

The maritime container management system specifies maritime containers by the maritime container number attached to the maritime container. In the harbor gate, the operator visually checks the maritime container number to see whether the maritime container in which the vehicle is going to work is correct or not.

The present inventor has proposed a maritime container management system capable of reducing human errors by utilizing ETC system at the time of driving through the gate (e.g., see Patent Documents 1 and 2).

### Prior Art Literature

### Patent Document

Patent Document 1: Japanese Patent No. 6202284.
Patent Document 2: Japanese Patent No. 6332887.

### SUMMARY OF THE INVENTION

### PROBLEM SOLVED BY THE INVENTION

However, if a person checks whether it is a correct maritime container by checking the container number, there may be misreading of the container number. It is also likely that the maritime container numbers listed on the top surface and on the sides of a maritime container are different because the maritime container is so-called 'Nikoi-chi' repaired by using two or more maritime containers. In such a case, there is a risk of human error in which checks are carried out on different maritime containers.

In addition, conventionally, in the event of a sudden occurrence such as the loss of a maritime container or the breakdown of a vehicle, the conventional maritime container management system may stop the site until the situation of the site is grasped and the work sequence is replaced by the maritime container management system.

Therefore, the present invention aims to reduce the risk of human error on confirming the container number by operators, and to provide a method of managing maritime container work or the like that can flexibly respond to a sudden situation.

### MEANS FOR SOLVING THE PROBLEMS

A first aspect of the present invention is a method of managing maritime container using a maritime container management system that manages work for maritime containers, the maritime container management system comprising a first transmitter to emit a first signal wirelessly installed in a first vehicle which performs work on the maritime container, and a second receiver to receive a wireless signal installed in a second vehicle which performs work on the maritime container, and the method of managing maritime container includes a first transmitting step, by the first transmitter, of transmitting the first signal wirelessly to the second receiver, a second receiving step, by the second receiver, of receiving the first signal; and a second work start step, by the second vehicle, of starting work on the maritime container in response to the second receiving step.

A second aspect of the present invention is a method of managing maritime container of the first aspect, wherein the first transmitter has a unique number different from any one of those of other transmitters on other vehicles, and wherein, in the first transmitting step, the first signal transmitted by the first transmitter includes the unique number.

A third aspect of the present invention is a method of managing maritime container of the second aspect, wherein the maritime container management system further comprises a determination unit to determine whether received information is correct or not, and wherein the method of managing maritime container further includes a determining step, by the determination unit, of determining whether the unique number is correct or not.

A fourth aspect of the present invention is a method of managing maritime container of the third aspect, wherein the maritime container management system further comprises a workflow storage unit to store a workflow list where a container number of the maritime container and the unique number, wherein the method of managing the maritime container further includes a container number obtaining step of obtaining the container number, before the determination step, and wherein, in the determining step, the determination unit determines based on the workflow list.

A fifth aspect of the present invention is a method of managing maritime container of any one of the first through fourth aspects, wherein the maritime container management system further comprises a second transmitter, installed in the second vehicle, to transmit a second signal to the maritime container management system, and wherein the method of maritime container management further includes a second transmitting step, by the second transmitter, of transmitting the second signal to the maritime container management system.

A sixth aspect of the invention is a method of managing maritime container of any one of the first through fifth aspects, wherein the maritime container management system further comprises a second control unit to control the second vehicle, and wherein, in the second work start step, the second control unit controls the second vehicle to initiate work on the maritime container, or the second control unit controls a second display unit of the second vehicle to display information of the maritime container to be worked on.

A seventh aspect of the present invention is a method of managing maritime container of any one of the first through sixth aspects, wherein the maritime container management system further comprises a second GPS receiving unit to receive the position information of the second vehicle in real time, and a position determination unit for determining whether the position of the second vehicle is appropriate or not, and wherein the method of managing maritime container further includes a position determining step, by the position determination unit, of determining whether or not the position of the second vehicle is appropriate based on a signal received by the second GPS receiving unit.

An eighth aspect of the present invention is a method of managing maritime container of the seventh aspect, wherein the maritime container management system further comprises a first base station to receive the position information, and a position correcting unit to correct the position information, and wherein the method of managing maritime container further includes a position correcting step, by the position correcting unit, of correcting the position information of the second vehicle using first base station signal received by the first base station.

A ninth aspect of the present invention is a method of managing maritime container of the eighth aspect, wherein the maritime container management system further comprises a second base station to receive the position information, being different from the first base station, and wherein, in the position correcting step, the position correcting unit corrects of the position information of the second vehicle using not only the first base station signal but also second base station signal received by the second base station. A tenth aspect of the present invention is a method of maritime container management of the eighth aspect, wherein the first base station is located within the premises of a container terminal in which the second vehicle resides.

An eleventh aspect of the present invention is a method of maritime container management of any one of the first through tenth aspects, wherein the first transmitter is an onboard ETC unit; and wherein the second receiver is a DSRC antenna.

A twelfth aspect of the present invention is a method of managing maritime containers of any one of the first through eleventh aspects, wherein the maritime container management system further comprises a first control unit to control the first vehicle, and wherein, before the first transmitting step, the method of managing maritime container includes a first cruise control step, by the first control unit, of controlling the first vehicle to keep distance greater than a certain distance from a vehicle running in front of the first vehicle and not to overtake the vehicle running in front of the first vehicle.

A thirteenth aspect of the present invention is a maritime container management method of the twelfth aspect, wherein, in the first cruise control step, the first control unit controls the first vehicle to travel only on one-way roads.

A fourteenth aspect of the present invention is a program to cause a computer of the maritime container management system to perform the method of maritime container management of any one of the first through the thirteenth aspects.

A fifteenth aspect of the present invention is a maritime container management system that manages work for maritime containers, comprising a first transmitter to emit a first signal wirelessly installed in a first vehicle which performs work on the maritime container and a second receiver to receive a wireless signal installed in a second vehicle which performs work on the maritime container, and a second control unit to control the second vehicle, wherein, in response to receiving the first signal by the second receiver, the second control unit controls the second vehicle to initiate work on the maritime container, or the second control unit controls a second display unit of the second vehicle to display information of the maritime container to be worked on.

### EFFECT OF THE INVENTION

According to each aspect of the present invention, it becomes possible for the first vehicle and the second vehicle to work on maritime containers autonomously without the need for human confirmation. Therefore, it becomes easier to work quickly and accurately by eliminating human errors such as misreading and transmission mistake of the container number on the maritime containers.

In addition, even if some kind of error occurs on the system side, the first vehicle and the second vehicle can communicate with each other to deliver the maritime container. Therefore, it becomes possible to provide a method of maritime container management and the like which can continue the work without waiting for system restoration and that can flexibly respond to sudden situations.

Furthermore, unlike the central system in which the central control unit transmits all instructions to each vehicle, it is a distributed system in which the vehicles communicate directly with each other, so that it is easier to suppress the increase in the burden of the central control unit even if the number of vehicles increases.

Here, when the identification of the maritime container is checked without being based on the container number, there may be a risk that the first vehicle or the second vehicle mistakes another vehicle for each other to which the maritime container should be handed over.

Therefore, according to the second aspect of the present invention, it becomes possible to identify that the first vehicle is an appropriate vehicle by the unique number of the first transmitter installed in the first vehicle. Therefore, it becomes possible to carry out the delivery of the maritime container in the terminal accurately without being based on the container number.

Furthermore, according to the third aspect of the present invention, it becomes possible to quickly and accurately determine that the first vehicle is an appropriate vehicle.

Furthermore, according to the fourth aspect of the present invention, it becomes easier to detect a mistake when the maritime container to be worked is wrong even if the vehicle is appropriate.

Further, according to the fifth aspect of the present invention, it becomes possible for the system side to grasp the state of work having been progressed by direct communication between the first vehicle and the second vehicle.

Further, according to the sixth aspect of the present invention, by the direct communication of the first vehicle and the second vehicle, it becomes easier to proceed the work autonomously and accurately not via the system.

Furthermore, according to the sixth or fifteenth aspect, it becomes possible to select the second work step when the second vehicle is automatically controlled and select the second work display step when the second vehicle is controlled by the driver.

Further, according to a seventh aspect of the present invention, it becomes possible to further ensure the work for the maritime container between appropriate vehicles.

In addition, according to the eighth aspect of the present invention, it becomes possible to correct the positional information of the vehicle given by GPS in which the deviation is known to occur. Correction of the error of the position information of the working vehicle in such a container terminal has not been put much on. However, the inventor of the present application focuses this problem for advanced automation of the work in the container terminal.

Furthermore, according to the ninth aspect of the present invention, in addition to the two-dimensional deviation of the positional information of the vehicle, it becomes possible to correct the three-dimensional deviation. This makes it possible to continuously correct the appropriate position information even when a three-dimensional shift such as an elevation or collapse of the ground surface is caused in the base station by an earthquake.

Furthermore, according to the tenth aspect of the present invention, the base station is installed near the vehicle. Therefore, even if the displacement of the ground layer caused by the earthquake occurs somewhere, it is possible to perform correction of the position information of the vehicle continuously with high probability without updating the base station position information.

Here, shipping or unloading of maritime containers loaded with hazardous materials, such as fireworks, is referred to as hot delivery. Extraneous trucks with such maritime containers are guided directly from the gate to the gantry crane without the maritime containers being stowed in the container yard.

Therefore, according to the eleventh aspect of the present invention, it becomes possible to realize the first transmitting step and the second receiving step which are the direct communication between the truck and the gantry crane, even if the truck loading the maritime container is not the dedicated truck in the container yard. In addition, the adoption of ETC system makes it easier to hold down the total cost of the maritime container management system.

ETCs are attached to vehicles running on public roads. It has not been usual to provide ETC devices and DSRC antennae to vehicles running only in a container yard as in the present invention. In particular, it is a technical philosophy unique to the inventor of the present invention to use a ETC system for the purpose to perform operations in response to communication between vehicles.

Furthermore, according to the twelfth aspect of the present invention, even if the first control unit operates the first vehicle autonomously, it is possible to significantly reduce the risk that the first vehicle collides with another vehicle. Therefore, it becomes possible to increase the autonomous running speed of the first vehicle as much as possible to increase the overall work speed.

Furthermore, according to the thirteenth aspect of the present invention, even when the first control unit operates the first vehicle autonomously, it is possible to avoid a head-on collision between the first vehicles. Therefore, it becomes further easier to increase the autonomous running speed of the first vehicle to increase the overall work speed.

When the first vehicle is regarded as a chassis traveling in a container yard, and the second vehicle is regarded as a straddle carrier, a transtainer or a gantry crane, each aspect of the present invention can be applied not only to the straddle carrier method but also to the transtainer method.

### BRIEF DESCRIPTION OF THE DRAWINGS

FIG. 1 is a block diagram illustrating an outline of the maritime container management system 1 according to the present embodiment.
FIG. 2 is a diagram illustrating an operation example of the maritime container management system 1 according to the present embodiment.
FIG. 3 is a flow diagram illustrating an outline of the method of managing maritime container using the maritime container management system 1 according to the present embodiment.

### DETAILED DESCRIPTION

### FORM FOR CARRYING OUT THE INVENTION

Hereinafter, embodiments of the present invention will be described in detail with reference to the drawings. It should be noted that the examples of the present invention are not limited to the contents described below.

### EXAMPLE 1

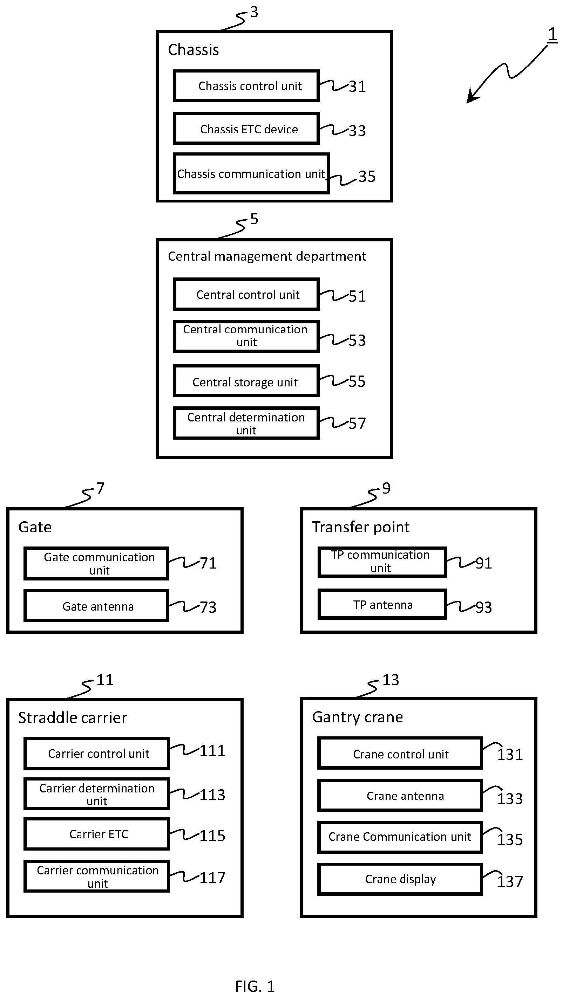

FIG. 1 is a block diagram illustrating an outline of a maritime container management system 1 according to the present exemplary embodiment. Referring to FIG. 1, a maritime container management system 1 (an example of a "maritime container management system" in Claims) includes a chassis 3, a central management department 5, a gate 7, a transfer point (TP) 9, a straddle carrier 11 (an example of a "first vehicle" in Claims), and a gantry crane 13 (an example of a "second vehicle" in Claims). Hereinafter, in this embodiment, it is assumed that the chassis 3 has carried a maritime container 15 (an example of "a maritime container" in Claims) to the container yard.

Chassis 3 is a vehicle for transporting the maritime container 15. Chassis 3 has a chassis control unit 31, a chassis ETC device 33, and a chassis communication unit 35. The chassis control unit 31 controls the chassis 3.

The chassis ETC device 33 is an ETC device that the chassis 3 has. The chassis communication unit 35 communicates with the central management department 5.

The central management department 5 manages the entire work related to the maritime container 15. The central management department 5 has a central control unit 51, a central communication unit 53, a central storage unit 55 (an example of a "work flow storage unit" in Claims), and a central determination unit 57. The central control unit 51 controls the central management department 5. The central communication unit 53 communicates with each communication unit in the container yard. The central storage unit 55 stores a workflow list and progress for the maritime container 15. The workflow list records the container numbers of maritime containers in conjunction with unique numbers specific to ETC devices. The central determination unit 57 determines whether the gantry crane 13 may ship a particular maritime container 15.

The gate 7 checks the chassis 3 and the maritime container 15 upon entry of chassis 3 into the container yard. The gate 7 has a gate communication unit 71, and a gate antenna 73. The gate communication unit 71 communicates with the central management department 5. The gate antenna 73 is a DSRC antenna installed in the gate.

The TP 9 is the place for placing the maritime container 15 which has been transported by the chassis 3. The TP 9 includes a TP communication unit 91 and a TP antenna 93. The TP communication unit 91 communicates with the central management department 5. The TP antenna 93 is a DSRC antenna installed in the TP.

The straddle carrier 11 carries maritime containers 15 from the TP 9 to the gantry crane 13. The straddle carrier 11 has a carrier control unit 111 (another example of the "first control unit" in Claims), a carrier determination unit 113, a carrier ETC 115 (an example of the "first transmitter" and the "onboard ETC unit" in Claims), and a carrier communication unit 117. The carrier control unit 111 controls the straddle carrier 11. The carrier determination unit 113 determines the maritime container 15 to which the straddle carrier 11 performs work. The carrier ETC 115 is an ETC device which the straddle carrier 11 has. The carrier communication unit 117 communicates with the central management department 5. The carrier determining unit 113 may be a part of the carrier control unit 111.

The gantry crane 13 ships maritime containers. The gantry crane 13 includes a crane control unit 131, a crane antenna 133 (an example of the "second receiver" and the "DSRC antenna" in Claims), a crane communication unit 135, and a crane display unit 137. The crane control unit 131 controls the gantry crane 13. The crane antenna 133 is a DSRC antenna the gantry crane 13 has. The crane communication unit 135 communicates with the central management department 5. The crane display unit 137, to the driver of the gantry crane 13, displays the information of the maritime container to be worked by the gantry crane 13.

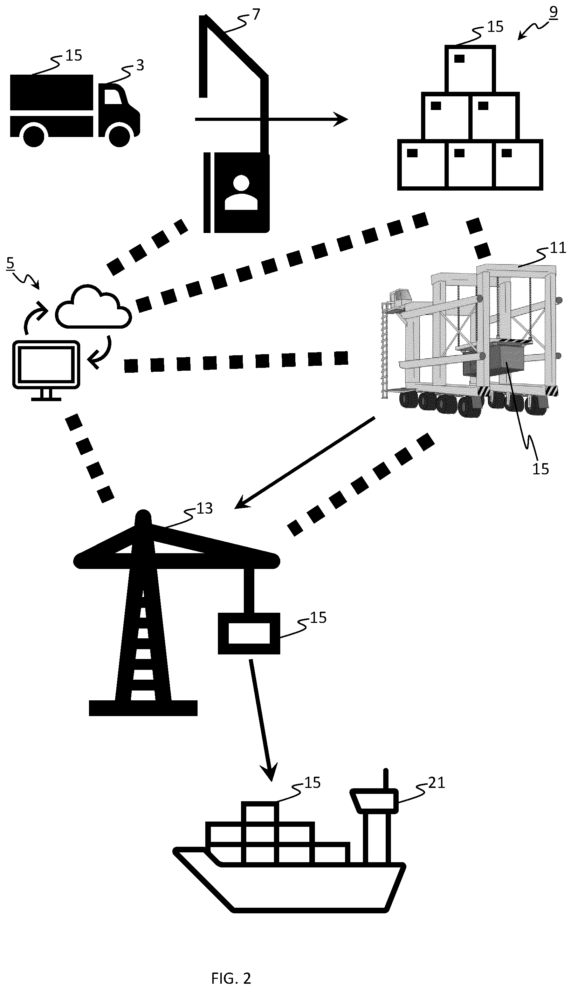

FIG. 2 is a diagram illustrating an operation example of the maritime container management system 1 according to the present embodiment.

Referring to FIG. 2, the maritime container 15 is transported by the chassis 3 through the gate 7 to the TP 9 in the container yard. The straddle carrier 11 carries the maritime containers 15 placed at the TP 9 to a predetermined place in the vicinity of the gantry crane 13. The maritime containers 15 placed in the vicinity of the gantry crane 13 are loaded onto the ship 21 by the gantry crane 13.

The central communication unit 53 communicates with the chassis communication unit 35, the gate communication unit 71, the TP communication unit 91, the carrier communication unit 117, and the crane communication unit 135 wirelessly as needed.

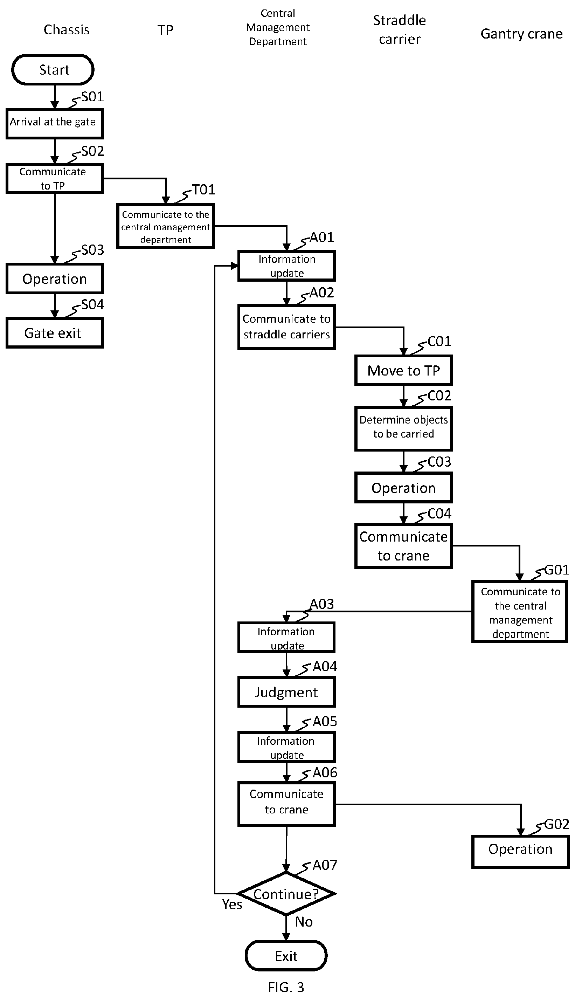

FIG. 3 is a flow diagram illustrating an outline of the method of managing maritime container using the maritime container management system 1 according to the present embodiment.

First, the marine cargo trader registers information such as container number, container type, chassis vehicle number, luggage, and destination location by request of shipper, and asks the marine consignor to carry in the terminal (export) or carry out the terminal (import) of the maritime container.

The marine consignor decides and arranges the chassis and the driver when necessary information is prepared. The maritime container management system 1 records a workflow list in which maritime container number, chassis vehicle number, workflow, or the like are recorded in combination (an example of the "container number obtaining step" in Claims). The dispatcher of the marine consignor notifies the driver by a notice such as an instruction or SNS. The driver who received the notification drives the chassis and goes to the gate.

Referring to FIG. 3, the chassis 3 with the maritime container 15 to be loaded arrives at the container yard and is checked at the gate 7 (step S01). The gate communication unit 71 performs Gat-Man communication, which is a communication including the container number of the maritime container to the central management department 5. The chassis 3 which has passed through the gate 7 transports the maritime containers 15 to the designated TP 9. At this time, the chassis ETC 33 of the chassis 3 performs the Cha-T communication, which is a communication including the container number to the TP antenna 93 installed in the TP 9 (step S02). The TP communication unit 91 installed in the TP 9 performs T-Man communication, which is a communication including the container number to the central management department 5 (step T01). By this communication, the central management department 5 grasps which container number of the maritime container 15 arrives at the TP 9. The central management department 5 stores the updated information included in the T-Man communication in the central storage unit 55 (step A01). The chassis 3 completes the task of placing the maritime containers 15 in the designated TP 9 (step S03). The Chassis 3 moves from the TP 9 to the gate 7 to exit the container yard (step S04).

The central management unit 5 performs Man-Str communication, which is a communication including moving instruction for the straddle carrier 11 toward the maritime containers 15 placed in the TP 9 (step A02). The Man-Str communication instructs the straddle carrier 11 where and which container number to take the maritime container 15. The straddle carrier 11 moves toward the TP 9 to load the maritime containers 15 in response to the Man-Str Communication (step C01).

The straddle carrier 11 arrives at the TP 9 and determines which of the maritime containers 15 to load (step C02). Here, basically, the straddle carrier 11 loads the maritime container 15 of the container number instructed by the central management department 5. However, when the carrier determination unit 113 determines that it is faster to bring the nearby maritime container 15, the carrier control unit 111 may control the straddle carrier 11 to load and carry the nearby maritime container 15.

Thus, by the maritime container management system 1 of this embodiment, the carrier control unit 111 is allowed to execute the mounting and transportation of the maritime container 15 in a different order from the instruction of the central management department 5. Therefore, flexible and quick management of the maritime containers 15 becomes possible.

When the straddle carrier 11 arrives close to the gantry crane 13 (step C03), the carrier ETC 115 of the straddle carrier 11 performs Str-Gan communication, which is a direct communication to the crane antenna 133 of the gantry crane not via the central management department 5, including carrier signal (an example of "first signal" in Claims) including the carrier ETC number (an example of "unique number" in Claims) (step C04). The step C04 is an example of "first transmitting step" and " second receiving step" in Claims. The crane communication unit 135 which has received the Str-Gan communication, to the central management department 5, performs Gan-Man communication, which is a communication including the carrier ETC number (step G01). The step G01 is an example of "second transmitting step" in Claims. The straddle carrier 11 places the maritime containers 15 near the gantry crane 13 and waits for the next instruction away from the gantry crane 13.

The central management department 5 receives the Gan-Man communication and stores the updated data in the central storage unit 55 (step A03). In addition, the central determination unit 57 (an example of "determination unit" in Claims) of the central management department 5 determines, based on the workflow list, whether or not it is the appropriate timing for the maritime container 15 having the container number corresponding to the received carrier ETC number to be loaded by the gantry crane 13 (step A04). The step A04 is an example of "determining step" in Claims. The central management department 5 stores the updated data in the central storage unit 55 based on the determination result (step A05). Further, the central management department 5, to the gantry crane 13, performs Man-Gan communication, which is a communication including the determination result (step A06).

The gantry crane 13 that has received the Man-Gan communication including the determination result that it is at the appropriate timing performs the operation for the maritime containers 15 carried by the straddle carrier 11 (step G02). That is, the gantry crane 13 performs, triggered by (in response to) the Str-Gan communication, the work for the maritime container through the communication with the central management department (an example of " second work start step" in Claims).

On the other hand, the gantry crane 13 that has received the Man-Gan communication including the determination result that the timing is not appropriate does not perform the work on the maritime container 15 which the straddle carrier 11 has carried. Further, the gantry crane 13 performs Gan-Man communication and Gan-Str communication to the central management department 5 and the straddle carrier 11, respectively. The central management department 5 which has received the Gan-Man communication does not update the information because there is no meaningful change in the situation. The straddle carrier 11, which has received the Gan-Str communication, places the maritime container 15 in a predetermined place nearby and waits for the next instruction at a location away from the gantry crane 13. In FIG. 3, it is illustrated on the assumption that the timing is appropriate.

The central management department 5 repeats the above steps until the maritime containers 15 to be managed reduces to zero. And it terminates the flow when the maritime containers 15 to be managed vanish (step A07).

### Example 2

Next, suppose that the maritime container 15 was suddenly lost. When a fully centralized maritime container management system is adopted, because there is no maritime container to be worked on, the response cannot be returned to the central management department from the vehicle in charge of the work. Therefore, the entire system stops because further work cannot be carried out.

However, the maritime container management system 1 of this embodiment is constructed based on an autonomous decentralized design. Therefore, even if it is assumed that a working vehicle which was supposed to work for the maritime container 15 cannot move by itself, the other working vehicles can continue their work autonomously. That is, the maritime container management system 1 can be realized as robust to unexpected circumstances.

Furthermore, in the autonomous decentralized maritime container management system 1, it is important to reduce the risk of an accident, for example, when the straddle carrier 11 having a wide travel range is operated autonomously.

Therefore, the carrier control unit 111 controls the straddle carrier 11 to maintain a certain distance or more from other vehicles running in front of the straddle carrier 11. The carrier control unit 111 also controls the straddle carrier 11 so as not to overtake other vehicles running in front of the straddle carrier 11. The control of the straddle carrier 11 by the carrier control unit 111 is an example of "first cruise control step" in Claims. Thus, even if the carrier control unit 111 controls the straddle carrier 11 to perform an autonomous operation, it is possible to significantly reduce the risk of the straddle carrier 11 colliding with another vehicle. Therefore, it becomes possible to increase the autonomous running speed of the straddle carrier 11 as much as possible to increase the overall work speed.

The carrier control unit 111 controls the straddle carrier 11 to drive only one-way roads. That is, the straddle carrier 11 is operated so as not to face the other vehicle. Thus, even if the carrier control unit 111 controls the straddle carrier 11 to operate autonomously, it becomes possible to prevent a frontal collision between the straddle carrier 11 and another vehicle. Therefore, it becomes even easier to increase the overall work speed by increasing the autonomous running speed of the straddle carrier 11.

In the above-mentioned embodiment, the case of shipping by transporting the container into the container yard is exemplified. However, the maritime container management system 1 and the maritime container management method of this embodiment are equally effective in the case of import where the maritime containers are unloaded from a ship and carried out from the container yard. Also in this situation, all the vehicles do not report to and wait for the central management unit 5 in a centralized manner. It becomes possible to respond flexibly to unexpected situations by allowing vehicles to communicate each other from ETC devices to DSRC antennae. In addition, it becomes possible to reduce the burden on the central management department.

In addition, the carrier ETC 115 may perform ETC communication to the TP antenna 93 when the straddle carrier 11 arrives at the TP 9. The carrier communication unit 117, after the carrier determination unit 113 determines the maritime container to be worked on, may perform communication including the container number of the maritime container determined to be worked on with the central management department 5. In this case, the central management department 5 which has received the communication may store the updated information in the central storage unit 55.

### Example 3

Further, in the above embodiment, the present invention is also applicable to a transtainer method using a transtainer (another example of "second vehicle" in Claims) instead of the straddle carrier 11 and a chassis (another example of "first vehicle" described in Claims). In this instance, the maritime container 15 may be loaded by the transtainer on the chassis which runs in the container yard at the TP 9, and the chassis transports the maritime container 15 from the transtainer to the gantry crane 13.

In case of shipping adopting transtainer method, the maritime container management system comprises a lane for stacking maritime containers instead of TP, a transtainer which travels across the lane, and a premises chassis that exclusively travels within the container yard. The transtainer has a DSRC antenna at its legs (another instance of "second receiver" and "DSRC antenna" in Claims). The maritime container management system may comprise a plurality of lanes and may comprise a transtainer for each lane.

In addition, the transtainer may have a GPS device and a GPS receiving device (an example of "GPS receiving unit" in Claims) and a position determination unit (an example of "position determination unit" in Claims) and self-verify that the transtainer is moving to the correct working position for the maritime containers to be worked on (an example of "second position determining step" in Claims).

Further, the maritime container management system may comprise a plurality of base stations receiving GPS signals within the premises of the container terminal. Here, the base station has a receiving device which receives GPS signal and a reference position storage unit which stores its own reference position. It is known that GPS signal can include errors. Therefore, it is likely that the vehicles cannot accurately grasp their own positions only by GPS signal. By installing the base station near the vehicle, it becomes possible to correct the two-dimensional deviation of the position. Further, by installing a plurality of base stations in the vicinity of the vehicles, it becomes possible to correct the deviation based on the relative position information between the plurality of base stations even when a three-dimensional positional deviation occurs such as uplift and depression of the ground surface due to an earthquake.

When a chassis with a maritime container passes through the gate, the central management department instructs the chassis which lane to transport the maritime container. The chassis transports maritime containers to the instructed lane. When the chassis approaches the lane, the chassis ETC device (another example of "first transmitter" and the "onboard ETC unit" in Claims) of the chassis performs the Cha-Tra communication, which is a direct communication to the DSRC antenna of the transtainer corresponding to the lane, not via the central management department, and includes the ETC number of the chassis ETC device. The transtainer communication unit of the transtainer performs Tra-Man communication, which is a communication that includes information to identify the chassis to the central management department. By this Tra-Man communication, the central management department grasps which chassis has arrived in which lane. The central management department determines whether the chassis has arrived at the appropriate lane or not. And, the central management department transmits the determination result to the transtainer communication unit. If the chassis has arrived at an inappropriate lane, the transtainer tells the chassis. Then, an appropriate lane may be transmitted from the transtainer to the chassis. The central management department stores the updated information in the central storage unit in response to the Tra-Man communication.

The transtainer completes the work of stacking maritime containers into lanes if the chassis is adequate. The chassis moves from the lane to the gate and exits the container yard.

The premises chassis then carries the maritime containers from the lanes where the transtainer stacked the maritime containers to the gantry crane. When the premises chassis approaches the lane, the ETC device of the premises chassis performs Cha-Tra communication, to the DSRC antenna of the transtainer corresponding to the lane, which is a direct communication not via the central management department and which includes information specifying the premises chassis. The transtainer communication unit of the transtainer performs Tra-Man communication, which is a communication including information specifying the premises chassis to the central management department. By this communication, the central management department grasps which premises chassis carried out the maritime container from which lane. The central management department determines whether the premises chassis arrives at the appropriate lane or not. And the central management department transmits the determination result to the transtainer communication unit. If the premises chassis arrives in an inappropriate lane, the transtainer will notify the premises chassis. In this case, an appropriate lane may be transmitted from the transtainer to the premises chassis. The central management department stores the updated information in the central storage unit in response to the Tra-Man communication.

Conventionally, the transtainer side could not grasp which lane the inappropriate chassis should have gone originally if it had not transported a maritime container. However, in the present invention, when the chassis approaches the transtainer, communications are performed automatically between ETC device and DSRC antenna, from the transtainer to the central management department, and from the central management department to the transtainer with the determination result. Therefore, it becomes possible for the transtainer side to grasp automatically which lane the inappropriate chassis should have gone originally.

The transtainer completes the work of loading the corresponding maritime container on the premises chassis. The premises chassis moves from the lane to the gantry crane. Thereafter, the shipping work of the gantry crane and the flow of communication is the same as in Example 1.

Note that there are cases where a road for chassis is provided on the right side or on the left side of the lane. Therefore, the transtainer may have DSRC antennae on both sides of the two legs. Alternatively, if a plurality of transtainers are provided, the transtainer may communicate only with a chassis that runs on a road close to the leg on one side of the transtainer. In this instance, the transtainer may have a DSRC antenna on only one foot. Further, in the case of maritime container 15 which rush to ship, chassis 3 with the maritime container 15 may carry directly to the gantry cranes 13 rather than placing the maritime container 15 at the TP 9 after entering the container yards from the gate 7. In this case, the chassis 3 that has entered from the gate 7 is another example of "first vehicle" in Claims. That is, Cha-Gan communication may be performed between the chassis ETC 33 of the chassis 3 and the crane antenna 133 of the gantry crane, which is a communication including the container number of the maritime container 15 being transported.

Further, in the present invention, while the chassis has a ETC device, it may not have a chassis communication unit for communicating with the central management department. Further, when the chassis has a receiving unit and a chassis communication unit for receiving a signal from the central management department and other devices, the receiving unit or the chassis communication unit may be capable of communicating with the display unit such as a car navigation mounted on the chassis, and the information may be displayed on the display unit.

As described above, in the present invention, each vehicle having an ETC device and/or a DSRC antenna performs operations triggered by (in response to) the communication from the other vehicle. This realizes an autonomous decentralized maritime container management system, etc., not a centrally intensive maritime container management system. The present invention realizes the autonomous decentralized system in which each vehicle performs work by communication from each other without waiting for instructions from the central management department. As a result, a flexible response in which the whole system continues to move becomes possible even when a part of vehicles fails and a scheduled work flow cannot be performed.

The above-described triggering signal may include, in addition to the container number, the destination and work contents of the received vehicle. If such information is included in the signals that are directly communicated between vehicles, it becomes easier to realize an autonomous decentralized maritime container management system not necessarily communicating via the central management department.

Further, in the present invention, vehicles other than the transtainer may be equipped with a GPS receiving unit.

### DESCRIPTION OF THE REFERENCE NUMBERS

(1) Maritime container management system, (3) Chassis, (5) Central management department, (7) Gate, (9) Transfer points (TP), (11) Straddle carrier, (13) Gantry crane, (15) Maritime containers, (21) Ship

## Claims

1. A method of managing maritime container using a maritime container management system that manages work for maritime containers, the maritime container management system comprising:
a first transmitter to emit a first signal wirelessly installed in a first vehicle which performs work on the maritime container; and
a second receiver to receive a wireless signal installed in a second vehicle which performs work on the maritime container; and
the method of managing maritime container includes:
a first transmitting step, by the first transmitter, of transmitting the first signal wirelessly to the second receiver;
a second receiving step, by the second receiver, of receiving the first signal; and
a second work start step, by the second vehicle, of starting work on the maritime container in response to the second receiving step.

2. The method of managing maritime container according to claim 1,
wherein the first transmitter has a unique number different from any one of those of other transmitters on other vehicles; and
wherein, in the first transmitting step, the first signal transmitted by the first transmitter includes the unique number.

3. The method of managing maritime container according to claim 2,
wherein the maritime container management system further comprises a determination unit to determine whether received information is correct or not; and
wherein the method of managing maritime container further includes a determining step, by the determination unit, of determining whether the unique number is correct or not.

4. The method of managing maritime container according to claim 3,
wherein the maritime container management system further comprises a workflow storage unit to store a workflow list where a container number of the maritime container and the unique number;
wherein the method of managing the maritime container further includes a container number obtaining step of obtaining the container number, before the determination step; and
wherein, in the determining step, the determination unit determines based on the workflow list.

5. The method of managing maritime container according to claim 1,
wherein the maritime container management system further comprises a second transmitter, installed in the second vehicle, to transmit a second signal to the maritime container management system; and
wherein the method of maritime container management further includes a second transmitting step, by the second transmitter, of transmitting the second signal to the maritime container management system.

6. The method of managing maritime container according to claim 1,
wherein the maritime container management system further comprises a second control unit to control the second vehicle; and
wherein, in the second work start step,
the second control unit controls the second vehicle to initiate work on the maritime container, or
the second control unit controls a second display unit of the second vehicle to display information of the maritime container to be worked on.

7. The method of managing maritime container according to claim 1,
wherein the maritime container management system further comprises:
a second GPS receiving unit to receive the position information of the second vehicle in real time; and
a position determination unit for determining whether the position of the second vehicle is appropriate or not;
and wherein the method of managing maritime container further includes a position determining step, by the position determination unit, of determining whether or not the position of the second vehicle is appropriate based on a signal received by the second GPS receiving unit.

8. The method of managing maritime container according to claim 7,
wherein the maritime container management system further comprises:
a first base station to receive the position information; and
a position correcting unit to correct the position information;
and wherein the method of managing maritime container further includes a position correcting step, by the position correcting unit, of correcting the position information of the second vehicle using first base station signal received by the first base station.

9. The method of managing maritime container according to claim 8,
wherein the maritime container management system further comprises a second base station to receive the position information, being different from the first base station; and
wherein, in the position correcting step, the position correcting unit corrects of the position information of the second vehicle using not only the first base station signal but also second base station signal received by the second base station.

10. The method of maritime container management according to claim 8, wherein the first base station is located within the premises of a container terminal in which the second vehicle resides.

11. The method of maritime container management according to claim 1, wherein the first transmitter is an onboard ETC unit; and
wherein the second receiver is a DSRC antenna.

12. The method of managing maritime containers of claim 1,
wherein the maritime container management system further comprises a first control unit to control the first vehicle; and
wherein, before the first transmitting step, the method of managing maritime container includes a first cruise control step, by the first control unit, of controlling the first vehicle to keep distance greater than a certain distance from a vehicle running in front of the first vehicle and not to overtake the vehicle running in front of the first vehicle.

13. The method of maritime container management according to claim 12, wherein, in the first cruise control step, the first control unit controls the first vehicle to travel only on one-way roads.

14. A program to cause a computer of the maritime container management system to perform the method of maritime container management according to claim 1.

15. A maritime container management system that manages work for maritime containers, comprising:
a first transmitter to emit a first signal wirelessly installed in a first vehicle which performs work on the maritime container; and
a second receiver to receive a wireless signal installed in a second vehicle which performs work on the maritime container; and
a second control unit to control the second vehicle,
wherein, in response to receiving the first signal by the second receiver,
the second control unit controls the second vehicle to initiate work on the maritime container, or
the second control unit controls a second display unit of the second vehicle to display information of the maritime container to be worked on.
